# EUROPEAN PATENT APPLICATION

(11) **EP 4 451 447 A1**
(43) Date of publication of application: **23.10.2024**
(21) Application number: 22941935.3
(22) Date of filing: 16.05.2022
(51) Int. Cl.: H01M 50/342, H01M 50/107

(54) **SHELL, BATTERY CELL, BATTERY AND ELECTRIC DEVICE**

(71) Applicant: Contemporary Amperex Technology (Hong Kong) Limited, Central, Central And Western District (HK)
(72) Inventor: SU, Huasheng, Ningde, Fujian 352100 (CN); LI, Quankun, Ningde, Fujian 352100 (CN); XING, Chengyou, Ningde, Fujian 352100 (CN); XU, Chunguang, Ningde, Fujian 352100 (CN); DU, Xianglong, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2022/093141
(87) International publication number: WO 2023/220889

(57) **Abstract**

Embodiments of the present application provide a housing, a battery cell, a battery and a power consuming device, which relate to the technical field of batteries. The housing includes a peripheral wall and a groove group, the groove group includes a first groove body and a second groove body that are provided in the peripheral wall, the first groove body and the second groove body are arranged at a distance from each other in a circumferential direction of the peripheral wall, and the residual thickness of the peripheral wall at a position where the first groove body is provided is less than the residual thickness of the peripheral wall at a position where the second groove body is provided. The first groove body has a volume V₁, the second groove body has a volume V₂, the smaller one of the volumes of the first groove body and the second groove body is represented by V₃, and the following formula is met: 0 ≤ |V₁ - V₂| ≤ 3V₃. A difference between the volume of the first groove body and the volume of the second groove body is set within a reasonable range, such that the stress deformation of the peripheral wall generated at the positions of the first groove body and the second groove body is relatively uniform, the deformation of the peripheral wall is reduced, and the peripheral wall is more regular in shape, meeting the assembly requirement of the housing, and improving the assembly quality of the battery cell.

## Description

### Technical Field

The present application relates to the technical field of batteries, and in particular to a housing, a battery cell, a battery and a power consuming device.

### Background Art

With the development of new energy technologies, the application of batteries is becoming more and more extensive. For example, the batteries are widely used in mobile phones, notebook computers, electric mopeds, electric vehicles, electric aircrafts, electric ships, electric toy cars, electric toy ships, electric toy aircrafts, electric tools, etc.

As an energy storage element, a battery cell generally outputs electric energy through a chemical reaction between an electrode assembly and an electrolyte. In order to ensure normal use of the battery cell, the battery cell is required to meet a certain assembly requirement, for example, assembly of a housing and an end cap. Therefore, how to improve the assembly quality of a battery cell is an urgent technical problem to be solved in the battery technology.

### Summary

Embodiments of the present application provide a housing, a battery cell, a battery and a power consuming device, which can effectively improve the assembly quality of the battery cell.

In a first aspect, the embodiments of the present application provide a housing. The housing includes a peripheral wall and a groove group, the groove group includes a first groove body and a second groove body that are provided in the peripheral wall, the first groove body and the second groove body are arranged at a distance from each other in a circumferential direction of the peripheral wall, and the residual thickness of the peripheral wall at a position where the first groove body is provided is less than the residual thickness of the peripheral wall at a position where the second groove body is provided. The first groove body has a volume V₁, the second groove body has a volume V₂, the smaller one of the volumes of the first groove body and the second groove body is represented by V₃, and the following formula is met: 0 ≤ |V₁ - V₂| ≤ 3V₃.

In the above technical solution, a difference between the volume of the first groove body and the volume of the second groove body is set within a reasonable range, such that the amount of extruded material during forming of the second groove body is not significantly different from the amount of extruded material during forming of the first groove body, the stress deformation of the peripheral wall generated at the positions of the first groove body and the second groove body is relatively uniform, the deformation of the peripheral wall is reduced, and the peripheral wall is more regular in shape, meeting the assembly requirement of the housing, and improving the assembly quality of the battery cell.

In some embodiments, 0 ≤ |V₁ - V₂| ≤ V₃. In this way, the difference between the volume of the first groove body and the volume of the second groove body is further decreased, and the difference between the amount of extruded material during forming of the second groove body and the amount of extruded material during forming of the first groove body is decreased, such that the stress deformation of the peripheral wall generated at the positions of the first groove body and the second groove body is more uniform, and the deformation of the peripheral wall is further reduced.

In some embodiments, V₁ ≤ V₂. In this way, the second groove body may be made large, so as to reduce the forming difficulty of the second groove body.

In some embodiments, the depth of the first groove body is greater than the depth of the second groove body, such that the residual thickness of the peripheral wall at the position where the first groove body is provided is less than the residual thickness of the peripheral wall at the position where the second groove body is provided. The depth of the first groove body being greater than the depth of the second groove body allows the residual thickness of the peripheral wall at the position where the first groove body is provided to be less than the residual thickness of the peripheral wall at the position where the second groove body is provided. This implementation is simple, and the peripheral wall may be configured as a structure with a uniform wall thickness.

In some embodiments, the depth of the first groove body is represented by T₁, the depth of the second groove body is represented by T₂, and the depths satisfy: T₁ ≤ 3T₂. In this way, the second groove body has a certain depth, and the case of insufficient material of the second groove body being extruded due to a smaller depth of the second groove body is not possible, such that the stress deformation of the peripheral wall generated at the positions where the first groove body and the second groove body are provided is more uniform.

In some embodiments, the depth of the first groove body is represented by T₁, the thickness of the peripheral wall is represented by L, and the depth and the thickness satisfy: 0.1 ≤ T₁/L < 1. It may be ensured that cracks occur at the position of the first groove body to relieve the pressure when the internal pressure of the housing reaches the initiation pressure, and that the housing does not crack at the position of the first groove body due to fatigue within the life cycle thereof.

In some embodiments, in the circumferential direction of the peripheral wall, the groove group includes a plurality of first groove bodies arranged at a distance from each other, and at least one second groove body is arranged between adjacent two of the first groove bodies. The plurality of first groove bodies are arranged at a distance from each other in the circumferential direction of the peripheral wall, and the housing can relieve the pressure from the positions of the plurality of first groove bodies when the internal pressure of the housing reaches the initiation pressure, thereby increasing the pressure relief efficiency of the housing. At least one second groove body is arranged between adjacent two of the first groove bodies, such that the stress deformation of the peripheral wall generated at the positions where the groove bodies are provided in the circumferential direction is more uniform, and the peripheral wall is more regular in shape.

In some embodiments, a plurality of second groove bodies are arranged between adjacent two of the first groove bodies in the circumferential direction of the peripheral wall.

In some embodiments, the first groove bodies and the second groove bodies are alternately arranged in the circumferential direction of the peripheral wall.

In some embodiments, the plurality of first groove bodies of the groove group are uniformly arranged in the peripheral wall in the circumferential direction of the peripheral wall. When the internal pressure of the housing reaches the initiation pressure, the housing can uniformly relieve the pressure from the positions of the plurality of first groove bodies, thereby increasing the pressure relief efficiency of the housing.

In some embodiments, both the first groove bodies and the second groove bodies are provided in an outer surface of the peripheral wall. The forming difficulty of the first groove bodies and the second groove bodies is reduced.

In some embodiments, the peripheral wall has a pressure relief portion, and the first groove body extends around the pressure relief portion along a curved trajectory. When the internal pressure of the housing reaches the initiation pressure, the pressure relief portion is opened with the first groove body as a boundary, the part of the peripheral wall corresponding to the pressure relief portion will form an opening portion, emissions from the housing are discharged through the opening portion, and the pressure relief portion has a large pressure relief area, such that the emissions can be quickly discharged from the housing, and the pressure relief rate is increased.

In some embodiments, the first groove body extends along a non-closed trajectory with a distance between a head end and a tail end. When the internal pressure of the housing reaches the initiation pressure, the pressure relief portion can be opened outward in a turned manner, the opened pressure relief portion is still partially connected to the peripheral wall except the pressure relief portion, and the pressure relief portion is not separated to fly out due to rapid discharging of the emissions.

In some embodiments, the first groove body includes a first groove portion, a second groove portion, and a third groove portion, wherein the first groove portion is arranged opposite the third groove portion in the extension direction of the peripheral wall, and the first groove portion, the second groove portion, and the third groove portion are sequentially connected to define the pressure relief portion. The first groove body is simple in structure, and when the internal pressure of the housing reaches the initiation pressure, the peripheral wall can crack along the first groove portion and the third groove portion after cracking along the second groove portion, such that the pressure relief portion is gradually turned outward and opened and has a large pressure relief area.

In some embodiments, the second groove portion is in the form of a circular arc, and both the first groove portion and the third groove portion are tangent to the second groove portion. The circular-arc-shaped second groove portion enables the portion of the peripheral wall at the second groove portion to be easier to crack than the portions at the first groove portion and the third groove portion, ensuring that the pressure relief portion can be opened to a greater extent during pressure relief. Since both the first groove portion and the third groove portion are tangent to the second groove portion, after cracking along the second groove portion, the peripheral wall can more smoothly crack along the first groove portion and the second groove portion.

In some embodiments, the first groove body extends along a closed trajectory that is connected end to end. When the internal pressure of the housing reaches the initiation pressure, the pressure relief portion can be completely separated from the peripheral wall except the pressure relief portion, and has a larger pressure relief area.

In some embodiments, the second groove body is a circular, elliptic or polygonal groove.

In some embodiments, a plurality of groove groups are provided in the peripheral wall, and the plurality of groove groups are arranged at a distance from each other in the extension direction of the peripheral wall. The provision of the plurality of groove groups in the peripheral wall improves the pressure relief capacity of the housing, such that the housing can relieve the pressure from more positions, and the pressure relief rate is increased.

In some embodiments, adjacent two of the groove groups are respectively a first groove group and a second groove group, the first groove body of the first groove group and the second groove body of the second groove group are oppositely arranged in the extension direction of the peripheral wall, and the first groove body of the second groove group and the second groove body of the first groove group are oppositely arranged in the extension direction of the peripheral wall. Such a structure not only allows the peripheral wall to be relatively regular in shape at the position of each groove group, but also enables the region between two adjacent groove groups of the peripheral wall to be relatively regular in shape.

In some embodiments, two groove groups are provided in the peripheral wall.

In some embodiments, the housing is a cylinder. The difference between the volume of the first groove body and the volume of the second groove body is set within the reasonable range, which can improve the roundness of the peripheral wall, thereby improving the assembly quality of the battery cell.

In a second aspect, the embodiments of the present application provide a battery cell, including an electrode assembly and a housing provided in any one of the embodiments of the first aspect, the electrode assembly being accommodated inside the housing.

In a third aspect, the embodiments of the present application provide a battery, including a case and a battery cell provided in any one of the embodiments of the second aspect, the battery cell being accommodated inside the case.

In a fourth aspect, the embodiments of the present application further provide a power consuming device, including a battery provided in any one of the embodiments of the third aspect.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of a housing shown in FIG. 3;
FIG. 5 is a front view of the housing shown in FIG. 4;
FIG. 6 is a cross-sectional view along line A-A of the housing shown in FIG. 5;
FIG. 7 is a front view of a housing according to other embodiments of the present application;
FIG. 8 is a cross-sectional view along line B-B of the housing shown in FIG. 7;
FIG. 9 is a partial enlarged view of part C of the housing shown in FIG. 5;
FIG. 10 is a front view of a housing according to further embodiments of the present application; and
FIG. 11 is a front view of a housing according to still further embodiments of the present application.

List of reference signs: 1 - Housing; 11 - Peripheral wall; 111 - Outer surface; 112 - Pressure relief portion; 113 - First end; 114 - Second end; 12 - Groove group; 12a - First groove group; 12b - Second groove group; 121 - First groove body; 1211 - First groove portion; 1212 - Second groove portion; 1213 - Third groove portion; 122 - Second groove body; 13 - Bottom wall; 2 - Electrode assembly; 21 - Positive tab; 22 - Negative tab; 3 - End cap; 4 - Electrode terminal; 5 - Current collecting member; 10 - Battery cell; 20 - Case; 201 - First portion; 202 - Second portion; 100 - Battery; 200 - Controller; 300 - Motor; 1000 - Vehicle; X - Circumferential direction; Z - Extension direction.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

The phrase "plurality of' appearing in the present application means two or more (including two).

In the present application, a battery cell may include a lithium ion secondary battery, a lithium ion primary battery, a lithium-sulfur battery, a sodium-lithium ion battery, a sodium ion battery or a magnesium ion battery, etc., which will not be limited in the embodiments of the present application. The battery cell may be cylindrical, flat, cuboid or in other shapes, which is also not limited in embodiments of the present application. The battery cells are generally classified into three types depending on the way of package: cylindrical battery cells, prismatic battery cells and pouch battery cells, which also will not be limited in the embodiments of the present application.

A battery mentioned in embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly is composed of a positive electrode plate, a negative electrode plate and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium ion battery as an example, the positive electrode current collector may be made of an aluminum, and the positive electrode active material may be lithium cobalt oxide, lithium iron phosphate, ternary lithium, lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative electrode current collector may be made of copper, and the negative electrode active material may be carbon, silicon, etc. In order to ensure that no fusing occurs when a large current passes, a plurality of positive tabs are provided and are stacked together, and a plurality of negative tabs are provided and are stacked together. The separator may be made of PP (polypropylene), PE (polyethylene), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the safety of the battery needs to be taken into account.

With regard to battery cells, in order to ensure the safety of the battery cells, a pressure relief mechanism may be provided in each of the battery cells. An internal pressure of the battery cell is released by the pressure relief mechanism, so as to reduce the risk of fire and explosion of the battery cell.

The inventors have found that even if the pressure relief mechanism is provided in the battery cell, the risk of fire and explosion of the battery cell still occurs frequently. The cause is that a conventional pressure relief mechanism is generally arranged at an end of the housing of the battery cell, and after a plurality of battery cells are stacked together, the pressure relief mechanisms on the ends of the housings are blocked by other battery cells, and thus pressure relief is not prompt, resulting in safety accidents.

In order to improve a pressure relief rate of the housing, the pressure relief mechanism may be arranged in a peripheral wall of the housing. For example, pressure relief groove bodies are provided in the peripheral wall of the housing, and when the internal pressure of the housing reaches an initiation pressure, the peripheral wall cracks along the pressure relief groove bodies to release the internal pressure of the housing.

The inventors have found that with the pressure relief groove bodies provided in the peripheral wall of the housing, the peripheral wall is prone to deformation as stress release at the positions on the peripheral wall where the pressure relief groove bodies are provided, which causes irregularities to the shape of the peripheral wall and thus cannot meet the assembly requirement of the housing. For example, the housing and an end cap are difficult to assemble, resulting in reduced assembly quality of the battery cell.

In view of this, the embodiments of the present application provide a housing. The housing includes a peripheral wall and a groove group, the groove group includes a first groove body and a second groove body that are provided in the peripheral wall, the first groove body and the second groove body are arranged at a distance from each other in a circumferential direction of the peripheral wall, and the residual thickness of the peripheral wall at a position where the first groove body is provided is less than the residual thickness of the peripheral wall at a position where the second groove body is provided. The first groove body has a volume V₁, the second groove body has a volume V₂, the smaller one of the volumes of the first groove body and the second groove body is represented by V₃, and the following formula is met: 0 ≤ |V₁ - V₂| ≤ 3V₃.

In such a housing, a difference between the volume of the first groove body and the volume of the second groove body is set within a reasonable range, such that the amount of extruded material during forming of the second groove body is not significantly different from the amount of extruded material during forming of the first groove body, the stress deformation of the peripheral wall generated at the positions of the first groove body and the second groove body is relatively uniform, the deformation of the peripheral wall is reduced, and the peripheral wall is more regular in shape, meeting the assembly requirement of the housing, and improving the assembly quality of the battery cell.

The housing described in the embodiments of the present application is applicable to a battery cell, a battery and a power consuming device using the battery.

The power consuming device may be a vehicle, a mobile phone, a portable device, a notebook computer, a ship, a spacecraft, an electric toy, a power tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device refers to a vehicle is used for description in the following embodiments.

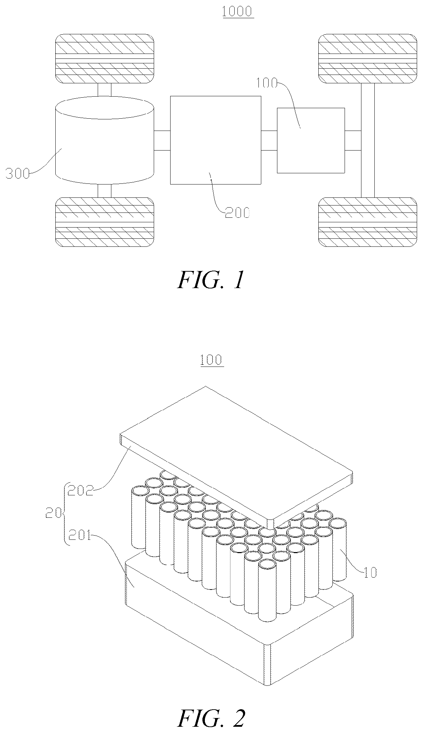

With reference to FIG. 1, FIG. 1 is a schematic diagram of a vehicle 1000 according to some embodiments of the present application. A battery 100 is provided inside the vehicle 1000, and the battery 100 may be arranged at the bottom, the front or the back of the vehicle 1000. The battery 100 may be configured to supply power to the vehicle 1000. For example, the battery 100 may be used as a power supply for operating the vehicle 1000.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded view of a battery 100 provided in some embodiments of the present application. The battery 100 includes battery cells 10 and a case 20, and the case 10 is configured to accommodate the battery cells 20.

The case 20 herein is a component for accommodating the battery cells 10, the case 20 provides an accommodating space for the battery cells 10, and the case 20 may be of various structures. In some embodiments, the case 20 may include a first portion 201 and a second portion 202. The first portion 201 and the second portion 202 are fitted to each other in a covered manner to define the accommodating space for accommodating the battery cell 10. The first portion 201 and the second portion 202 may have various shapes such as a cuboid and a cylinder. The first portion 201 may be of a hollow structure with an open side, the second portion 202 may also be of a hollow structure with an open side, and the open side of the second portion 202 covers the open side of the first portion 201, such that the case 20 having the accommodating space is formed. Alternatively, the first portion 201 is of a hollow structure with an open side, the second portion 202 is of a plate-like structure, and the second portion 202 covers the open side of the first portion 201, such that the case 20 having the accommodating space is formed. The first portion 201 and the second portion 202 may be sealed by a sealing element, which may be a seal ring, a sealant, etc.

In the battery 100, one or more battery cells 10 may be provided. If a plurality of battery cells 10 are provided, the plurality of battery cells 10 may be connected in series, in parallel, or in series-parallel. The series-parallel connection refers that some of the plurality of battery cells 10 are connected in series and the rest are connected in parallel. It is possible that a plurality of battery cells 10 are first connected in series or in parallel or in series-parallel to form a battery module, and a plurality of battery modules are then connected in series or in parallel or in series-parallel to form a unit and are accommodated inside the case 20. It is also possible that all the battery cells 10 are directly connected in series, or in parallel, or in series-parallel, and a unit composed of all the battery cells 10 is then accommodated inside the case 20.

In some embodiments, the battery 100 may further include a busbar component, and the plurality of battery cells 10 may be electrically connected by means of the busbar component, so as to implement series connection, parallel connection, or series-parallel connection between the plurality of battery cells 10. The busbar component may be a metal conductor such as a copper conductor, an iron conductor, an aluminum conductor, a stainless steel conductor, and an aluminum alloy conductor.

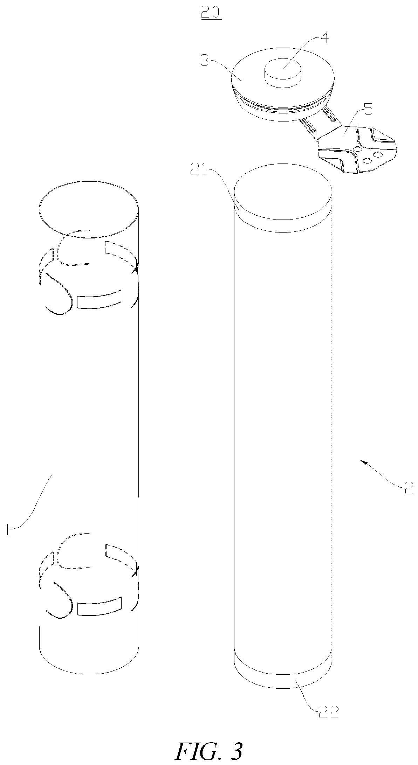

Referring to FIG. 3, FIG. 3 is an exploded view of a battery cell 10 according to some embodiments of the present application. The battery cell 10 includes a housing 1, an electrode assembly 2, and an end cap 3.

The housing 1 is a component configured to accommodate the electrode assembly 2. The housing 1 may be of a hollow structure with an opening formed at one end. The housing 1 may also be of a hollow structure with openings formed at two opposite ends. The housing 1 may have various shapes such as a cylinder and a cuboid. The housing 1 may be made of various materials, such as copper, iron, aluminum, steel, and aluminum alloy.

The electrode assembly 2 is a component in which an electrochemical reaction occurs in the battery cell 10. The electrode assembly 2 may include a positive electrode plate, a negative electrode plate, and a separator. The electrode assembly 2 may be of a wound structure formed by winding the positive electrode plate, the separator and the negative electrode plate, or a stacked structure formed by stacking the positive electrode plate, the separator and the negative electrode plate. The electrode assembly 2 is provided with a positive tab 21 and a negative tab 22. The positive tab 21 may be a part of the positive electrode plate that is not coated with the positive electrode active material layer, and the negative tab 22 may be a part of the negative electrode plate that is not coated with the negative electrode active material layer.

The end cap 3 is a component that closes the opening of the housing 1 to isolate internal environment of the battery cell 10 from external environment. The end cap 3 and the housing 1 together define a sealed space for accommodating the electrode assembly 2, an electrolyte and other components. The end cap 3 may be welded to the housing 1 so as to close the opening of the housing 1. The end cap 3 may be shaped to adapt to the shape of the housing 1. For example, the housing 1 is of a cuboid structure, and the end cap 3 is of a rectangular plate-like structure adapted to the housing 1. For another example, the housing 1 is of a cylinder, and the end cap 3 is of a circular plate-like structure adapted to the housing 1. The end cap 3 may be made of various materials, such as copper, iron, aluminum, steel, and aluminum alloy.

In an embodiment in which the housing 1 is of a hollow structure with an opening formed at one end, one end cap 3 may be correspondingly provided. In an embodiment in which the housing 1 is of a hollow structure with openings formed at two ends, two end caps 3 may be correspondingly provided.

The end cap 3 may be provided with an electrode terminal 4. The electrode terminal 4 is configured to be electrically connected to the electrode assembly 2, so as to output electric energy of the battery cell 10. The electrode terminal 4 may be directly or indirectly connected to the electrode assembly 2. For example, the electrode terminal 4 may be indirectly connected to the positive tab 21 or the negative tab 22 of the electrode assembly 2 via a current collecting member 5. As shown in FIG. 3, in an embodiment in which one end cap 3 is provided in the battery cell 10, one electrode terminal 4 in the battery cell 10 may be correspondingly provided, the electrode terminal 4 may be connected to the positive tab 21 via the current collecting member 5, and the negative tab 22 is connected to the housing 1.

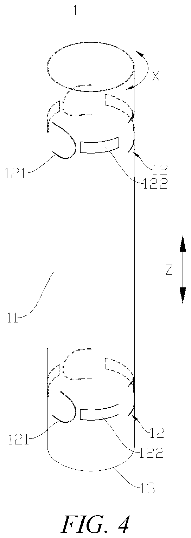

Referring to FIG. 4, FIG. 4 is a schematic structural diagram of the housing 1 shown in FIG. 3. The embodiments of the present application provide a housing 1. The housing includes a peripheral wall 11 and a groove group 12. The groove group 12 includes a first groove body 121 and a second groove body 122 formed in the peripheral wall 11. The first groove body 121 and the second groove body 122 are arranged at a distance from each other in a circumferential direction X of the peripheral wall 11. The residual thickness of the peripheral wall 11 at a position where the first groove body 121 is provided is less than the residual thickness of the peripheral wall 11 at a position where the second groove body 122 is provided. The first groove body 121 has a volume V₁, the second groove body 122 has a volume V₂, the smaller one of the volumes of the first groove body 121 and the second groove body 122 is represented by V₃, and the following formula is met: 0 ≤ |V₁ - V₂| ≤ 3V₃.

The peripheral wall 11 is a body portion of the housing 1 extending in a length direction. Taking an example in which the housing 1 is a cylinder, the length direction of the housing 1 is consistent with an axial direction, the peripheral wall 11 is a portion of the housing 1 extending in the axial direction, the peripheral wall 11 is of a cylinder structure circles the axis of the housing 1, the peripheral wall 11 has an annular cross section that is perpendicular to the axis of the housing 1.

The housing 1 may further include a bottom wall 13, the bottom wall 13 is located at an end of the peripheral wall 11 in an extension direction Z, the bottom wall 13 is formed integrally with the peripheral wall 11, an opening is formed in an end of the peripheral wall 11 opposite the bottom wall 13, and such a housing 1 is of a hollow structure with an opening formed at one end.

The groove group 12 includes a plurality of groove bodies that are provided in the peripheral wall 11 and arranged in the circumferential direction X of the peripheral wall 11, some of the groove bodies are the first groove bodies 121, and the other groove bodies are the second groove bodies 122. In the groove group 12, one or more first groove bodies 121 may be provided, and one or more second groove bodies 122 may be provided. One or more groove groups 12 may be provided on the peripheral wall 11 . Taking an example in which the housing 1 is a cylinder, the first groove body 121 and the second groove body 122 of each groove group 12 are located on the same circumference of the peripheral wall 11.

The first groove body 121 is a pressure relief groove body. When the internal pressure of the housing 1 reaches an initiation pressure, the peripheral wall 11 can crack at the position of the first groove body 121 to release the internal pressure of the housing 1, and in this case, the peripheral wall 11 does not crack at the position of the second groove body 122. The second groove body 122 has the function of correcting the deformation of the peripheral wall 11, such that the peripheral wall 11 is more regular in shape. The first groove body 121 and the second groove body 122 may each be formed in the peripheral wall 11 in a plurality of ways, such as stamping forming and milling forming. The first groove body 121 and the second groove body 122 may be provided in an outer surface 111 of the peripheral wall 11 or provided in an inner surface of the peripheral wall 11. The first groove body 121 and the second groove body 122 may be the same or different in shape. The first groove body 121 may be a linear groove extending along a linear trajectory that may be circular, elliptic, polygonal, U-shaped, C-shaped or straight or the like. The first groove body 121 may also be a circular, elliptic or polygonal groove or the like. The second groove body 122 may be a linear groove extending along a linear trajectory that may be circular, elliptic, U-shaped, C-shaped, straight or the like. The second groove body 122 may also be a circular, elliptic, polygonal groove or the like.

The residual thickness of the peripheral wall 11 at the position where the first groove body 121 is provided is the thickness of the remaining portion of the peripheral wall 11 at the first groove body 121 after the first groove body 121 is provided. The residual thickness of the peripheral wall 11 at the position where the second groove body 122 is provided is the thickness of the remaining portion of the peripheral wall 11 at the second groove body 122 after the second groove body 122 is provided. The residual thickness of the peripheral wall 11 at the position where the first groove body 121 is provided is less than the residual thickness of the peripheral wall 11 at the position where the second groove body 122 is provided, such that the portion of the peripheral wall 11 in which the first groove body 121 is provided is weaker than the portion in which the second groove body 122 is provided, and normal pressure relief can be performed at the position of the first groove body 121 when the internal pressure of the housing 1 reaches the initiation pressure.

The volume of the first groove body 121 is equal to the volume of a material corresponding to an internal space of the first groove body 121 during forming of the first groove body 121 in the peripheral wall 11. The volume of the second groove body 122 is equal to the volume of a material corresponding to an internal space of the second groove body 122 during forming of the second groove body 122 in the peripheral wall 11. Taking an example in which the first groove body 121 and the second groove body 122 are formed by stamping, when the first groove body 121 is formed by stamping, the volume (amount of extruded material) of the portion of the peripheral wall 11 removed by extrusion is equal to the volume of the first groove body 121, and when the second groove body 122 is formed by stamping, the volume (amount of extruded material) of the portion of the peripheral wall 11 removed by extrusion is equal to the volume of the second groove body 122.

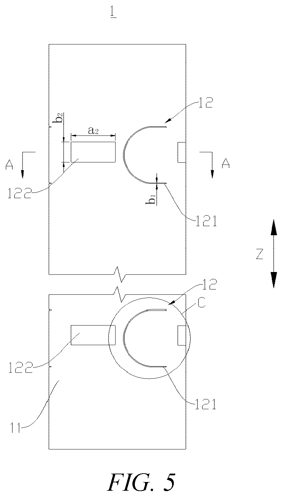

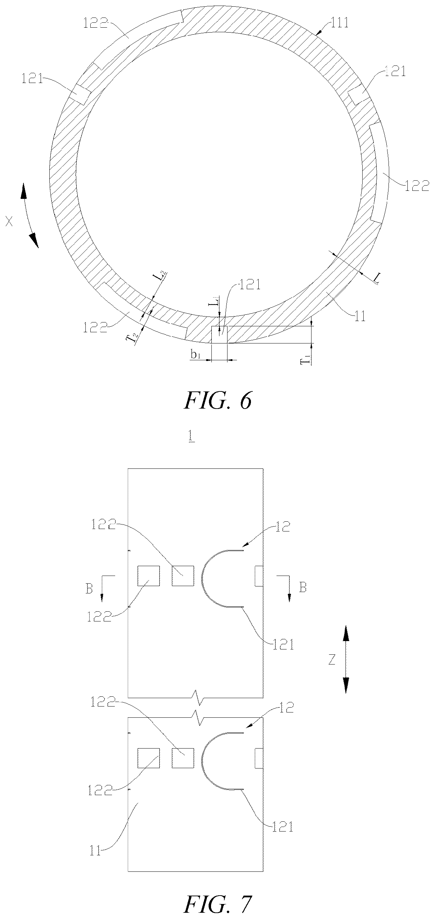

Referring to FIGS. 5 and 6, FIG. 5 is a front view of the housing 1 shown in FIG. 4, and FIG. 6 is a cross-sectional view along line A-A of the housing 1 shown in FIG. 5. Taking an example in which the first groove body 121 is a linear groove extending along a linear trajectory, V₁ = a₁ × b₁ × T₁, wherein a₁ (not shown in FIGS. 5 and 6) is the extension length of the first groove body 121 along the linear trajectory, b₁ is the width of the first groove body 121, and T₁ is the depth of the first groove body 121. Taking an example in which the second groove body 122 is a rectangular groove, V₂ = a₂ × b₂ × T₂, wherein a₂ is the length of the second groove body 122, b₂ is the width of the second groove body 122, and T₂ is the depth of the second groove body 122.

In the embodiments of the present application, the volume of the first groove body 121 may be less than the volume of the second groove body 122, the volume of the first groove body 121 may be greater than the volume of the second groove body 122, or the volume of the first groove body 121 may be equal to the volume of the second groove body 122, in this case, either of the first groove body 121 and the second groove body 122 may be construed as the minimum. If V₁ < V₂, V₃ = Vi; if V₂ < V₁, V₃ = V₂; and if V₂ = V₁, V₃ = V₂ = V₁. V₃ may also be expressed as ((Vi + V₂) - |V₁ - V₂|)/2. Each of V₁, V₂ and V₃ is in mm³.

For a common housing 1, after the pressure relief groove body (the first groove body 121) is provided in the peripheral wall 11, the peripheral wall 11 deforms along with the stress release at the position of the pressure relief groove body, which causes the housing 1 to be not able to meet the assembly requirement. Taking an example in which the housing 1 is a cylinder, after the peripheral wall 11 deforms, the roundness of the peripheral wall 11 is likely not to meet the assembly requirement, and thus the welding quality of the housing 1 and the end cap 3 is impaired.

However, in the embodiments of the present application, the second groove body 122 is provided in the peripheral wall 11, and a difference between the volume of the first groove body 121 and the volume of the second groove body 122 is set within a reasonable range, such that the amount of extruded material during forming of the second groove body 122 is not significantly different from the amount of extruded material during forming of the first groove body 121, the stress deformation generated by the peripheral wall 11 at the positions of the first groove body 121 and the second groove body 122 is more uniform, the deformation of the peripheral wall 11 is reduced, and the peripheral wall 11 is more regular in shape, meeting the assembly requirement of the housing 1 and improving the assembly quality of the battery cell 10.

Taking an example in which the housing 1 is a cylinder, the difference between the volume of the first groove body 121 and the volume of the second groove body 122 is set within a reasonable range, which can improve the roundness of the peripheral wall 11 and allow the housing 1 to meet the assembly requirement, thereby improving the assembly quality of the battery cell 10.

In some embodiments, 0 ≤ |V₁ - V₂| ≤ V₃.

It may be understood that if V₁ < V₂, V₂ -V₁ ≤ V₁ is satisfied; and if V₂ < V₁, V₁ -V₂ ≤ V₂ is satisfied.

In the embodiments, the difference between the volume of the first groove body 121 and the volume of the second groove body 122 is further decreased, and the difference between the amount of extruded material during forming of the second groove body 122 and the amount of extruded material during forming of the first groove body 121 is decreased, such that the stress deformation generated by the peripheral wall 11 at the positions where the first groove body 121 and the second groove body 122 are provided is more uniform, and the deformation of the peripheral wall 11 is further reduced.

In some embodiments, V₁ ≤ V₂. In this way, the second groove body 122 may be made large, so as to reduce the forming difficulty of the second groove body 122.

In some embodiments, still referring to FIG. 6, the depth of the first groove body 121 is greater than the depth of the second groove body 122, such that the residual thickness of the peripheral wall 11 at the position where the first groove body 121 is provided is less than the residual thickness of the peripheral wall 11 at the position where the second groove body 122 is provided.

The depth of the first groove body 121 is greater than the depth of the second groove body 122, namely, T₁ > T₂. The thickness of the peripheral wall 11 is represented by L, the residual thickness of the peripheral wall 11 at the position where the first groove body 121 is provided is represented by Li, and the residual thickness of the peripheral wall 11 at the position where the second groove body 122 is provided is represented by L₂ wherein L₁ = L - T₁, L₂ = L - T₂, and since T₁ > T₂, L₁ < L₂.

Taking an example in which the second groove body 122 is a rectangular groove, since T₁ > T₂, V₁ ≤ V₂ may be achieved by increasing the length a₂ (see FIG. 5) and/or the width b₂ (see FIG. 5) of the second groove body 122.

The depth of the first groove body 121 being greater than the depth of the second groove body 122 allows the residual thickness of the peripheral wall 11 at the position where the first groove body 121 is provided to be less than the residual thickness of the peripheral wall 11 at the position of the second groove body 122 the second groove body 122. This implementation is simple, and the peripheral wall 11 may be configured as a structure with a uniform wall thickness.

In some embodiments, T₁ ≤ 3T₂.

In this way, the second groove body 122 has a certain depth, and the case of insufficient material of the second groove body 122 being extruded due to a smaller depth of the second groove body 122 is not possible, such that the stress deformation of the peripheral wall 11 generated at the positions where the first groove body 121 and the second groove body 122 are provided is more uniform.

In some embodiments, 0.1 ≤ T₁/L < 1.

It may be ensured that cracks occur at the position of the first groove body 121 to relieve the pressure when the internal pressure of the housing 1 reaches the initiation pressure, and that the housing 1 does not crack at the position of the first groove body 121 due to fatigue within the life cycle thereof.

In some embodiments, still referring to FIG. 6, in the circumferential direction X of the peripheral wall 11, the groove group 12 includes a plurality of first groove bodies 121 arranged at a distance from each other, and at least one second groove body 122 is arranged between two adjacent first groove bodies 121.

One or more second groove bodies 122 may be arranged between two adjacent first groove bodies 121 in the circumferential direction X of the peripheral wall 11. Taking an example in which the groove group 12 includes three first groove bodies 121, for ease of description, the three first groove bodies 121 are a first pressure relief groove body, a second pressure relief groove body and a third pressure relief groove body respectively, one or more second groove bodies 122 may be arranged between the first pressure relief groove body and the second pressure relief groove body, one or more second groove bodies 122 may be arranged between the second pressure relief groove body and the third pressure relief groove body, and one or more second groove bodies 122 may be arranged between the third pressure relief groove body and the first pressure relief groove body. The number of the second groove bodies 122 between the first pressure relief groove body and the second pressure relief groove body may be equal or unequal to the number of the second groove bodies 122 between the second pressure relief groove body and the third pressure relief groove body. The number of the second groove bodies 122 between the second pressure relief groove body and the third pressure relief groove body may be equal or unequal to the number of the second groove bodies 122 between the third pressure relief groove body and the first pressure relief groove body.

The plurality of first groove bodies 121 are arranged at a distance from each other in the circumferential direction X of the peripheral wall 11, and the housing 1 can relieve the pressure from the positions of the plurality of first groove bodies 121 when the internal pressure of the housing 1 reaches the initiation pressure, thereby increasing the pressure relief efficiency of the housing 1. At least one second groove body 122 is arranged between two adjacent first groove bodies 121, such that the stress deformation of the peripheral wall 11 generated at the positions where the groove bodies are provided in the circumferential direction X is more uniform, and the peripheral wall 11 is more regular in shape.

In some embodiments, still referring to FIG. 6, the first groove bodies 121 and the second groove bodies 122 are alternately arranged in the circumferential direction X of the peripheral wall 11.

It may be understood that in the groove group 12, the number of the second groove bodies 122 is equal to the number of the first groove bodies 121, and a second groove body 122 is arranged between two adjacent first groove bodies 121 in the circumferential direction X of the peripheral wall 11. Taking an example in which the groove group 12 includes three first groove bodies 121 and three second groove bodies 122, and the three first groove bodies 121 and the three second groove bodies 122 of the groove group 12 are arranged in the circumferential direction X of the peripheral wall 11 in the following sequence: the first groove body 121 - the second groove body 122 - the first groove body 121 - the second groove body 122 - the first groove body 121 - the second groove body 122.

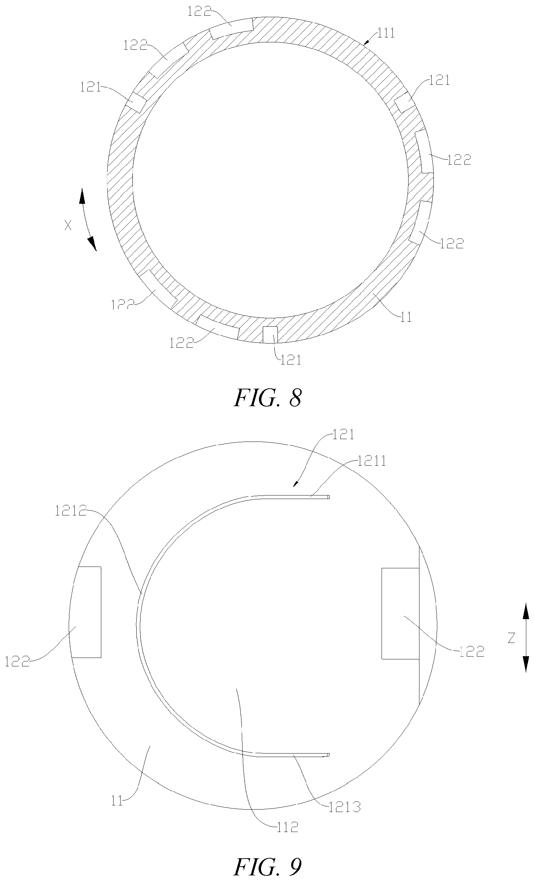

In other embodiments, referring to FIGS. 7 and 8, FIG. 7 is a front view of a housing 1 according to other embodiments of the present application. FIG. 8 is a cross-sectional view along line B-B of the housing 1 shown in FIG. 7. A plurality of second groove bodies 122 are arranged between two adjacent first groove bodies 121 in the circumferential direction X of the peripheral wall 11.

In the circumferential direction X of the peripheral wall 11, two, three, four or more second groove bodies 122 may be arranged between two adjacent first groove bodies 121. The volume of each second groove body 122 between two adjacent first groove bodies 121 is represented by V₂. Exemplarily, in FIGS. 7 and 8, two second groove bodies 122 are arranged between two adjacent first groove bodies 121.

In some embodiments, referring to FIGS. 6 and 8, a plurality of first groove bodies 121 of the groove group 12 are uniformly arranged in the peripheral wall 11 in the circumferential direction X of the peripheral wall 11.

It may be understood that in the groove group 12, an angle between any two adjacent first groove bodies 121 are equal in the circumferential direction X of the peripheral wall 11. Taking an example in which the housing 1 is a cylinder, the angle between two adjacent first groove bodies 121 is 360 degrees/N, wherein N is the number of the first groove bodies 121. For example, there are three first groove bodies 121 in the groove group 12, and the angle between two adjacent first groove bodies 121 is 120°.

In the embodiment, the plurality of first groove bodies 121 of the groove group 12 are uniformly arranged in the peripheral wall 11 in the circumferential direction X of the peripheral wall 11, such that the peripheral wall 11 provided with the plurality of first groove bodies 121 releases a stress uniformly, and the deformation of the peripheral wall 11 is reduced. In addition, when the internal pressure of the housing 1 reaches the initiation pressure, the housing 1 can uniformly relieve the pressure from the positions of the plurality of first groove bodies 121, thereby increasing the pressure relief efficiency of the housing 1.

In some embodiments, still referring to FIGS. 6 and 8, both the first groove bodies 121 and the second groove bodies 122 are arranged in an outer surface 111 of the peripheral wall 11.

Taking an example in which the housing 1 is a cylinder, the outer surface 111 is an outer cylindrical surface of the peripheral wall 11.

During forming, both the first groove bodies 121 and the second groove bodies 122 are recessed from the outer surface 111 of the peripheral wall 11 in the thickness direction of the peripheral wall 11, which reduces the forming difficulty of the first groove body 121 and the second groove body 122 and facilitating forming the first groove body 121 and the second groove body 122 by means of stamping.

In some embodiments, referring to FIG. 9, FIG. 9 is a partial enlarged view of C part of the housing 1 shown in FIG. 5. The peripheral wall 11 is provided with the pressure relief portion 112, and the first groove body 121 extends around the pressure relief portion 112 along a curved trajectory.

The pressure relief portion 112 is a region of the peripheral wall 11 defined by the first groove body 121 extending along the curved trajectory, and the first groove body 121 is located at an edge of the pressure relief portion 112. The curved trajectory is a linear trajectory that may have various forms, such as circular, elliptical, polygonal, U-shaped and C-shaped.

When the internal pressure of the housing 1 reaches the initiation pressure, the pressure relief portion 112 is opened with the first groove body 121 as a boundary, the part of the peripheral wall 11 corresponding to the pressure relief portion 112 will form an opening portion, emissions from the housing 1 are discharged through the opening portion, and the pressure relief portion has a large pressure relief area, such that the emissions can be quickly discharged from the housing 1, and the pressure relief rate is increased.

In some embodiments, still referring to FIG. 9, the first groove body 121 extends along a non-closed trajectory with a distance between a head end and a tail end.

The non-closed trajectory is a linear trajectory, and may have various forms, such as the forms of U and C. As shown in FIG. 9, taking an example of the non-closed trajectory of U shape, the first groove body 121 is a U-shaped groove, and a U-shaped region defined by the first groove body 121 is the pressure relief portion 112.

When the internal pressure of the housing 1 reaches the initiation pressure, the pressure relief portion 112 can be opened outward in a turned manner, the opened pressure relief portion 112 is still partially connected to the peripheral wall 11 except the pressure relief portion 112, and the pressure relief portion 112 is not separated to fly out due to rapid discharging of the emissions.

In some embodiments, still referring to FIG. 9, the first groove body 121 includes a first groove portion 1211, a second groove portion 1212, and a third groove portion 1213, wherein the first groove portion 1211 is arranged opposite the third groove portion 1213 in the extension direction Z of the peripheral wall 11, and the first groove portion 1211, the second groove portion 1212, and the third groove portion 1213 are sequentially connected to define the pressure relief portion 112.

Both the first groove portion 1211 and the third groove portion 1213 may extend in the circumferential direction X (not shown in FIG. 9) of the peripheral wall 11, and the second groove portion 1212 may be linear or non-linear in the extension direction Z of the peripheral wall 11. The first groove portion 1211, the second groove portion 1212 and the third groove portion 1213 are sequentially connected to form a substantially U-shaped structure. It may be understood that the first groove body 121 is a U-shaped groove.

Taking an example in which the housing 1 is a cylinder, the extension direction Z of the peripheral wall 11 is the axial direction of the peripheral wall 11.

It may be understood that in this embodiment, if the first groove body 121 is a linear groove extending along the linear trajectory, V₁ = a₁ × b₁ × T₁, wherein a₁ is the sum of the extension length of the first groove portion 1211, the extension length of the second groove portion 1212 and the extension length of the third groove portion 1213.

In this embodiment, the first groove body 121 is simple in structure, and when the internal pressure of the housing 1 reaches the initiation pressure, the peripheral wall 11 can crack along the first groove portion 1211 and the third groove portion 1213 after cracking along the second groove portion 1212, such that the pressure relief portion 112 is gradually turned outward and opened and has a large pressure relief area.

In some embodiments, still referring to FIG. 9, the second groove portion 1212 is in the form of a circular arc, and both the first groove portion 1211 and the third groove portion 1213 are tangent to the second groove portion 1212.

A straight line arranged in the extension direction Z of the peripheral wall 11 is tangent to the circular-arc-shaped second groove portion 1212 at the midpoint of the second groove portion, the peripheral wall 11 is more likely to crack at that position, and the midpoint of the second groove portion 1212 acts as a starting position for the peripheral wall 11 cracking along the first groove body 121 during a pressure relief process, such that the portion of the peripheral wall 11 at the second groove portion 1212 is easier to crack than the portions at the first groove portion 1211 and the third groove portion 1213, ensuring that the pressure relief portion 112 can be opened to a greater extent during pressure relief. Since both the first groove portion 1211 and the third groove portion 1213 are tangent to the second groove portion 1212, after cracking along the second groove portion 1212, the peripheral wall 11 can more smoothly crack along the first groove portion 1211 and the second groove portion 1212.

In other embodiments, the first groove body 121 extends along a closed trajectory that is connected end to end.

The closed trajectory is a linear trajectory, and may have various forms, such as circular, elliptical, and polygonal.

When the internal pressure of the housing 1 reaches the initiation pressure, the pressure relief portion 112 can be completely separated from the peripheral wall 11 except the pressure relief portion 112, and has a larger pressure relief area.

In some embodiments, the second groove body 122 is a circular groove, an elliptic groove or a polygonal groove. The polygonal groove includes a triangular groove, a rectangular groove, a trapezoidal groove, a parallelogram groove, a pentagonal groove, a hexagonal groove, and the like. Exemplarily, in FIGS. 4-6, the second groove body 122 is a rectangular groove.

It may be understood that if the second groove body 122 is a circular groove, a cross section of a groove side surface of the second groove body 122 is circular; if the second groove body 122 is the an elliptic groove, the cross section of the groove side surface of the second groove body 122 is elliptic; and if the second groove body 122 is a polygonal groove, the cross section of the groove side surface of the second groove body 122 is polygonal. The cross section of the groove side surface is perpendicular to the depth direction of the second groove body 122.

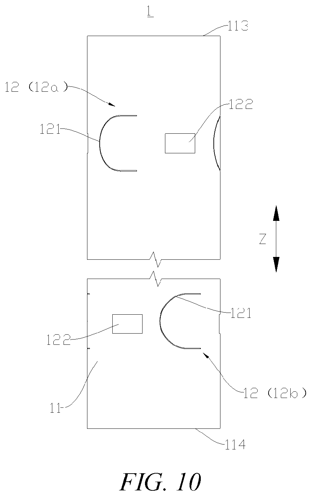

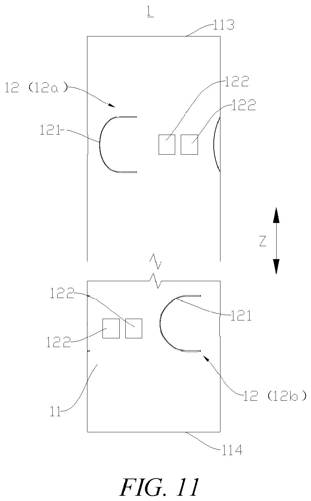

In some embodiments, referring to FIGS. 10 and 11, FIG. 10 is a front view of a housing 1 according to further embodiments of the present application; and FIG. 11 is a front view of a housing 1 according to still further embodiments of the present application. The peripheral wall 11 is provided with a plurality of groove groups 12, and the plurality of groove groups 12 are arranged at a distance from each other in the extension direction Z of the peripheral wall 11.

In this embodiment, two, three, four or more groove groups 12 may be provided in the peripheral wall 11. The pressure relief capacity of the housing 1 is improved, such that the housing 1 can relieve the pressure from more positions, and the pressure relief rate is increased.

In some embodiments, still referring to FIGS. 10 and 11, two adjacent groove groups 12 are respectively a first groove group 12a and a second groove group 12b, a first groove body 121 of the first groove group 12a and a second groove body 122 of the second groove group 12b are oppositely arranged in the extension direction Z of the peripheral wall 11, and a first groove body 121 of the second groove group 12b and a second groove body 122 of the first groove group 12a are oppositely arranged in the extension direction Z of the peripheral wall 11.

One first groove body 121 of the first groove group 12a and one second groove body 122 of the second groove group 12b may be oppositely arranged in the extension direction Z of the peripheral wall 11, and one first groove body 121 of the second groove group 12b and one second groove body 122 of the first groove group 12a may be oppositely arranged in the extension direction Z of the peripheral wall 11. For example, as shown in FIG. 10, one second groove body 122 is arranged between two first groove bodies 121 of the first groove group 12a, and one second groove body 122 is also arranged between two first groove bodies 121 of the second groove group 12b. In this way, it is possible for one first groove body 121 of the first groove group 12a and one second groove body 122 of the second groove group 12b to be oppositely arranged in the extension direction Z of the peripheral wall 11, and for one first groove body 121 of the second groove group 12b and one second groove body 122 of the first groove group 12a to be oppositely arranged in the extension direction Z of the peripheral wall 11.

One first groove body 121 of the first groove group 12a and the plurality of second groove bodies 122 of the second groove group 12b may be oppositely arranged of the extension direction Z of the peripheral wall 11, and one first groove body 121 of the second groove group 12b and the plurality of second groove bodies 122 of the first groove group 12a may be oppositely arranged in the extension direction Z of the peripheral wall 11. For example, as shown in FIG. 11, two second groove bodies 122 are arranged between two first groove bodies 121 of the first groove group 12a, and two second groove bodies 122 are also arranged between two first groove bodies 121 of the second groove group 12b. In this way, it is possible for one first groove body 121 of the first groove group 12a and two second groove bodies 122 of the second groove group 12b to be oppositely arranged in the extension direction Z of the peripheral wall 11, and for one first groove body 121 of the second groove group 12b and the two second groove bodies 122 of the first groove group 12a to be oppositely arranged in the extension direction Z of the peripheral wall 11.

The first groove bodies 121 of the first groove group 12a and the first groove bodies 121 of the second groove group 12b are arranged in a staggered manner in the circumferential direction X of the peripheral wall 11, the peripheral wall 11 may be divided into a plurality of regions in the circumferential direction X of the peripheral wall 11, and the first groove bodies 121 of the first groove group 12a and the first groove bodies 121 of the second groove group 12b are alternately arranged in the plurality of regions. Taking an example in which the first groove group 12a and the second groove group 12b each include three first groove bodies 121, the peripheral wall 11 may be divided into six regions in the circumferential direction X of the peripheral wall 11, and the three first groove bodies 121 of the first groove group 12a and the three first groove bodies 121 of the second groove group 12b are alternately arranged in the six regions. In two adjacent regions, one first groove body 121 of the first groove group 12a and a corresponding second groove body 122 of the second groove group 12b are located in one region, and one first groove body 121 of the second groove group 12b and a corresponding second groove body 122 of the first groove group 12a are located in the other region. In this way, the sum of the volumes of the first groove body 121 and the second groove body 122 in the one region is substantially equal to the sum of the volumes of the first groove body 121 and the second groove body 122 in the other region, such that the region of the peripheral wall 11 between two adjacent groove groups 12 is relatively regular in shape.

Such a structure not only allows the peripheral wall 11 to be relatively regular in shape at the position of each groove group 12, but also enables the region between two adjacent groove groups 12 of the peripheral wall 11 to be relatively regular in shape. Taking an example in which the housing 1 is a cylinder, for each groove group 12, since the difference between the volume of the first groove body 121 and the volume of the second groove body 122 is set within the reasonable range, the peripheral wall 11 is relatively regular in shape at the position where the groove group 12 is provided, and the roundness of the peripheral wall 11 at the position where the groove group 12 is provided is improved. For two adjacent groove groups 12, since the first groove body 121 of the first groove group 12a and at least one second groove body 122 of the second groove group 12b are oppositely arranged in the extension direction Z of the peripheral wall 11, the first groove body 121 of the second groove group 12b and at least one second groove body 122 of the first groove group 12a are oppositely arranged in the extension direction Z of the peripheral wall 11, and such a structure allows the roundness of the region of the peripheral wall 11 between the two adjacent groove groups 12 to be improved.

In some embodiments, still referring to FIGS. 10 and 11, two groove groups 12 are provided in the peripheral wall 11.

Exemplarily, in the extension direction Z of the peripheral wall 11, the peripheral wall 11 has a first end 113 and a second end 114 opposite each other, the two groove groups 12 are respectively close to the first end 113 and the second end 114, a distance between the groove group 12 close to the first end 113 and the first end 113 is less than a distance between the two groove groups 12, and a distance between the groove group 12 close to the second end 114 and the second end 114 is also less than the distance between the two groove groups 12. In the extension direction Z of the peripheral wall 11, the distance between the groove group 12 close to the first end 113 and the first end 113 may be equal to the distance between the groove group 12 close to the second end 114 and the second end 114.

In some embodiments, the housing 1 is a cylinder.

The embodiments of the present application provide a battery cell 10, including an electrode assembly 2 and a housing 1 provided in any one of the embodiments described above. The electrode assembly 2 is accommodated inside the housing 1.

The embodiments of the present application provide a battery 100, including a case 20 and battery cells 10 provided in any one of the embodiments described above. The battery cells 10 are accommodated inside the case 20.

The embodiments of the present application provide a power consuming device, including a battery 100 provided in any one of the embodiments described above.

The power consuming device may be any one of the devices using the battery 100 described above.

In addition, as shown in FIG. 10, the embodiments of the present application further provide a cylindrical housing, including a peripheral wall 11 and two groove groups 12. Each groove group 12 includes a plurality of first groove bodies 121 and a plurality of second groove bodies 122 provided in the peripheral wall 11, wherein the first groove bodies 121 and the second groove bodies 122 are arranged at a distance from each other in the circumferential direction X of the peripheral wall 11, one second groove body 122 is arranged between two adjacent first groove bodies 121 in the circumferential direction X of the peripheral wall 11 (not shown in FIG. 10), and the residual thickness of the peripheral wall 11 at the positions where the first groove bodies 121 are provided is less than the thickness of the peripheral wall 11 at the positions where the second groove bodies 122 are provided. The first groove body 121 of one groove group 12 and the second groove body 122 of the other groove group 12 are oppositely arranged in the extension direction Z of the peripheral wall 11, and the first groove body 121 of the other groove group 12 and the second groove body 122 of one groove group 12 are oppositely arranged in the extension direction Z of the peripheral wall 11. The first groove body 121 has a volume V₁, the second groove body 122 has a volume V₂, the smaller one of the volumes of the first groove body 121 and the second groove body 122 is represented by V₃, and the following formula is met: 0 ≤ |V₁ - V₂| ≤ 3V₃.

For each groove group 12, since the difference between the volume of the first groove body 121 and the volume of the second groove body 122 is set within the reasonable range, the peripheral wall 11 is relatively regular in shape at the position where the groove group 12 is provided, and the roundness of the peripheral wall 11 at the position where the groove group 12 is provided is improved. For the two groove groups 12, since the first groove body 121 of one groove group 12 and the second groove body 122 of the other groove group 12 are oppositely arranged in the extension direction Z of the peripheral wall 11, and the first groove body 121 of the other groove group 12 and the second groove body 122 of one groove group 12 are oppositely arranged in the extension direction Z of the peripheral wall 11, the roundness of the region of the peripheral wall 11 between the two adjacent groove groups 12 can be improved, thereby improving the overall roundness of the cylindrical housing.

It should be noted that the embodiments in the present application and features in the embodiments may be combined with each other without conflicts.

The above embodiments are only used to explain the technical solutions of the present application, and are not intended to limit the present application, and various modifications and changes of the present application may be made by those skilled in the art. Any modifications, equivalent substitutions, improvements, and the like made within the spirit and principle of the present application should fall within the scope of protection of the present application.

## Claims

1. A housing, comprising:
a peripheral wall; and
a groove group comprising a first groove body and a second groove body that are provided in the peripheral wall, the first groove body being arranged at a distance from the second groove body in a circumferential direction of the peripheral wall, and the residual thickness of the peripheral wall at the position where the first groove body is provided being less than the residual thickness of the peripheral wall at the position where the second groove body is provided;
wherein the first groove body has a volume V₁, the second groove body has a volume V₂, the smaller one of the volumes of the first groove body and the second groove body is represented by V₃, and the following formula is met: 0 ≤ |V₁ - V₂| ≤ 3V₃.

2. The housing according to claim 1, wherein 0 ≤ |V₁ - V₂| ≤ V₃.

3. The housing according to claim 1 or 2, wherein V₁ ≤ V₂.

4. The housing according to any one of claims 1-3, wherein the depth of the first groove body is greater than the depth of the second groove body, such that the residual thickness of the peripheral wall at the position where the first groove body is provided is less than the residual thickness of the peripheral wall at the position where the second groove body is provided.

5. The housing according to claim 4, wherein the depth of the first groove body is represented by T₁, the depth of the second groove body is represented by T₂, and the depths satisfy: T₁ ≤ 3T₂.

6. The housing according to any one of claims 1-5, wherein the depth of the first groove body is represented by T₁, the wall thickness of the peripheral wall is represented by L, and the depth and the thickness satisfy: 0.1 ≤ T₁/L < 1.

7. The housing according to claim 1, wherein in the circumferential direction of the peripheral wall, the groove group comprises a plurality of first groove bodies arranged at a distance from each other, and at least one second groove body is arranged between adjacent two of the first groove bodies.

8. The housing according to claim 7, wherein a plurality of the second groove bodies are arranged between adjacent two of the first groove bodies in the circumferential direction of the peripheral wall.

9. The housing according to claim 7, wherein the first groove bodies and the second groove bodies are alternately arranged in the circumferential direction of the peripheral wall.

10. The housing according to any one of claims 7-9, wherein the plurality of first groove bodies of the groove group are uniformly arranged in the peripheral wall in the circumferential direction of the peripheral wall.

11. The housing according to any one of claims 1-10, wherein both the first groove bodies and the second groove bodies are arranged in an outer surface of the peripheral wall.

12. The housing according to any one of claims 1-11, wherein the peripheral wall has a pressure relief portion, and the first groove body extends around the pressure relief portion along a curved trajectory.

13. The housing according to claim 12, wherein the first groove body extends along a non-closed trajectory with a distance between a head end and a tail end.

14. The housing according to claim 13, wherein the first groove body comprises a first groove portion, a second groove portion, and a third groove portion, the first groove portion and the third groove portion being oppositely arranged in the extension direction of the peripheral wall, and the first groove portion, the second groove portion and the third groove portion being sequentially connected to define the pressure relief portion.

15. The housing according to claim 14, wherein the second groove portion is in the form of a circular arc, and both the first groove portion and the third groove portion are tangent to the second groove portion.

16. The housing according to claim 12, wherein the first groove body extends along a closed trajectory that is connected end to end.

17. The housing according to any one of claims 1-16, wherein the second groove body is a circular, elliptic or polygonal groove.

18. The housing according to any one of claims 1-17, wherein a plurality of groove groups are provided in the peripheral wall, and the plurality of groove groups are arranged at a distance from each other in the extension direction of the peripheral wall.

19. The housing according to claim 18, wherein adjacent two of the groove groups are respectively a first groove group and a second groove group, the first groove body of the first groove group and the second groove body of the second groove group are oppositely arranged in the extension direction of the peripheral wall, and the first groove body of the second groove group and the second groove body of the first groove group are oppositely arranged in the extension direction of the peripheral wall.

20. The housing according to claim 18 or 19, wherein two groove groups are provided in the peripheral wall.

21. The housing according to any one of claims 1-20, wherein the housing is a cylinder.

22. A battery cell, comprising:
a housing according to any one of claims 1-21; and
an electrode assembly accommodated inside the housing.

23. A battery, comprising:
a case; and
battery cells according to claim 22, the battery cells being accommodated inside the case.

24. A power consuming device, comprising a battery according to claim 23.
